# EUROPÄISCHE PATENTSCHRIFT

(11) **EP 2 016 721 B1**
(45) Veröffentlichungstag und Bekanntmachung des Hinweises auf die Patenterteilung: **02.12.2009**
(21) Anmeldenummer: 07724124.8
(22) Anmeldetag: 10.04.2007
(51) Int. Cl.: H04W 72/02

(54) **FUNKÜBERTRAGUNGSSYSTEM UND VERFAHREN FÜR DESSEN BETRIEB**
RADIO TRANSMISSION SYSTEM AND METHOD FOR OPERATION THEREOF
SYSTEME DE TRANSMISSION RADIO ET SON PROCEDE DE FONCTIONNEMENT

(30) Priorität: 10.05.2006 DE 102006021831
(43) Veröffentlichungstag der Anmeldung: 21.01.2009
(73) Patentinhaber: Rohde & Schwarz GmbH & Co. KG, 81671 München (DE)
(72) Erfinder: GREINER, Günter, 81539 München (DE); BOTT, Rainer, 82346 Andechs (DE)
(74) Vertreter: Körfer, Thomas
(86) Internationale Anmeldenummer: PCT/EP2007/003183
(87) Internationale Veröffentlichungsnummer: WO 2007/128376

(56) Entgegenhaltungen:
- DE-A1- 19 651 593
- US-A1- 2003 108 016
- US-A1- 2004 185 887
- US-A1- 2004 266 493

## Beschreibung

Die Erfindung betrifft ein Funkübertragungssystem und ein entsprechendes Betriebsverfahren.

Moderne Funknetzkonzepte wie Network-Centric-War-fare-Konzepte stellen Informationen in geeigneter Form und ohne Zeitverzug überall dort zur Verfügung, wo sie benötigt werden. Dafür geeignete Kommunikationssysteme entwickelt man bereits mit hoher Intensität; an sie werden anspruchsvolle Forderungen gestellt, z. B. hohe Mobilität, größtmögliche Interoperabilität (z.B. auch mit zivilen Behörden (BOS)), Transparenz der Netze (drahtgebunden/drahtlos, PSTN, ISDN, LAN, WAN / Funk/Richtfunk-Netz, militärisch/zivil), universelle Erreichbarkeit, Informationsübertragung im Verbund Aufklärung/Führung/Wirkung: Positions-Report, Lagedarstellung, Freund-Feind-Kennung, Sensordaten, Bilder von Digitalkameras, GPS-Tracking, e-mail, Kurzmeldungen, sonstige IP-Dienste, spontane mobile Vernetzbarkeit (MANET) und Unabhängigkeit von einer Infrastruktur.

Die Art der Kommunikation von hochmobilen Netzteilnehmern wie taktischen Truppen ändert sich zunehmend. Bisher stand fast ausschließlich die Applikation "sichere Sprachverbindung" im Vordergrund, d. h. Sprache verschlüsselt und resistent gegenüber möglichen Störern.

Heute besteht neben dem Sprechfunk zunehmend der Wunsch nach der Vernetzung unterschiedlicher Kommunikationsteilnehmer bei persönlicher Erreichbarkeit. Diese Art der Vernetzung erfordert eine Interoperabilität der Kommunikationstechniken und eine Integration von Netzen zu Verbundsystemen.

Aus Gründen der Interoperabilität ist für die Vernetzung der Datenkommunikation über die verschiedenen Netze hinweg die Verwendung von Internet-Protokollen, z. B. TCP/IP, erforderlich. Die funktechnische Umsetzung kann schmalbandig z. B. mit dem 1.5 MIL-STD-188-220 B erfolgen. Der Standard spezifiziert die unteren Protokollebenen für eine Interoperabilität von taktischen Funkgeräten.

Der taktische Funk basiert auf Kanälen mit derzeit 25 kHz Bandbreite, über die üblicherweise brutto 16 kbit/s, mit FEC bis zu 9,6 kbit/s übertragen werden können. Die Verwendung von Standard-Internetprotokollen zur Realisierung spontaner mobiler Vernetzbarkeit (MANET) in der militärischen Funkkommunikation wäre eine schnelle und kostengünstige Lösung. Dies erfordert jedoch Datenraten im Bereich von Mbit/s und damit Bandbreiten im MHz-Bereich. Sie können deshalb in den nur 25 kHz breiten Funkkanälen nicht genutzt werden. Funkgeräte mit derartig hohen Bandbreiten wurden bisher im taktischen Bereich bis zur Kompanieebene nicht eingesetzt.

Funkgeräte mit hohen Datenraten und damit großen Signalbandbreiten unterliegen bei Ausbreitung der Funksignale entlang der Erdoberfläche (also ohne Freiraumausbreitung wie bei fliegenden Plattformen) folgenden Einschränkungen: Für einen effektiven Einsatz empfiehlt sich ein höherer Frequenzbereich (225 GHz bis 400 MHz, aber auch bis zu 2 GHz oder darüber). Allerdings sinkt die Reichweite von Funksignalen mit zunehmender Frequenz. Die Erhöhung der Sendeleistung vergrößert diese Reichweite nur mäßig. Die achtfache Sendeleistung ergibt nur eine doppelte Reichweite.

Die benötigte Bandbreite ist proportional zur gewünschten Datenrate. Allerdings sinkt die Reichweite mit zunehmender Bandbreite. Das hat zur Folge, dass bei einer Erhöhung der Datenrate von 16 kbit/s auf 1,6 Mbit/s die Reichweite ca. um den Faktor 5 abnimmt. Weil hohe Bandbreiten in der Regel höhere Sendefrequenzen erforderlich machen - da z.B. der taktische Frequenzbereich 30 MHz bis 88 GHz wegen der hohen Bandbreite und dichten Belegung nicht mehr genutzt werden kann - ist mit einer weiteren Einbuße an Reichweite zu rechnen.

Höherwerte Modulationsarten benötigen höhere Störabstände und bewirken daher bei gleicher Sendeleistung eine geringere Reichweite als bei Verwendung einfacherer Modulationsverfahren.

Die Zahl der für die Funkabdeckung notwendigen Funkgeräte hängt sehr stark von der Reichweite ab. Diese ist wiederum abhängig vom Frequenzbereich, notwendigen Störabstand, der Datenrate bzw. Signalbandbreite und der Sendeleistung.

Die DE 196 51 593 A1 und die DE 198 07 931 A1 beschäftigen sich mit einer Optimierung dieser Parameter.

Breitbandige Funkgeräte für hohe Datenraten sind sicherlich die ideale Lösung für die vernetzte Kommunikation. Allerdings ist ihre Funkreichweite begrenzt. Funkgeräte mit 25-kHz-Kanälen zeichnen sich durch mittlere Datenraten, hohe Reichweiten und robuste Modulationsverfahren aus. Deswegen sind sie im taktischen Einsatz unverzichtbar. Zusätzlich zu sicherem Sprechfunk können sie mit IP-unterstützenden Protokollen wie dem MIL-STD-188-220 B in derzeitige und künftige Datennetze eingebunden werden.

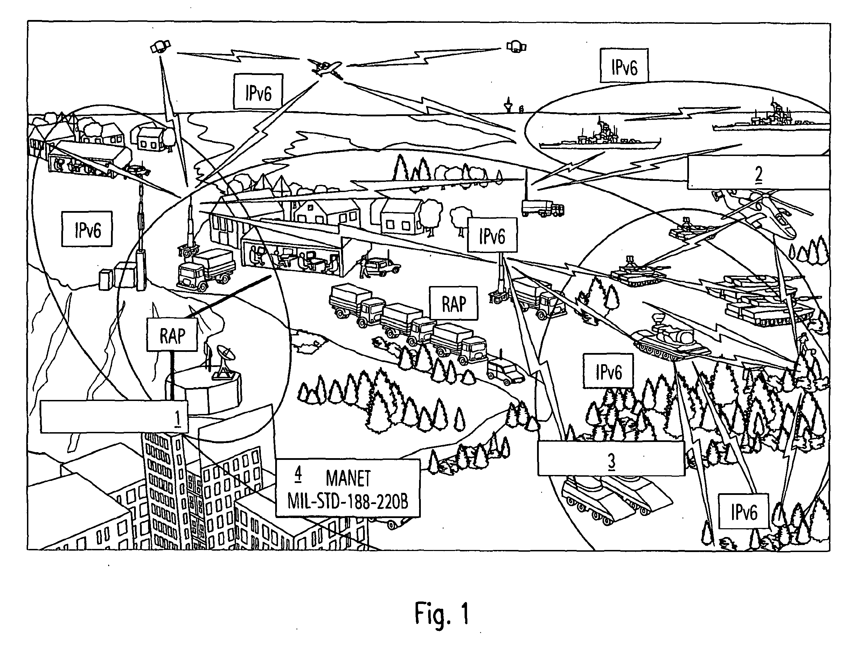

Mit dem MIL-STD-188-220 B sind selbst organisierende Netze mit automatischem Routing realisierbar, in denen Applikationen unterstützt werden, die auf dem Internetprotokoll IP basieren. Damit lässt sich der herkömmliche taktische Funk zum digitalen Gefechtsfeldnetz erweitern, wie dies in Fig. 1 dargestellt ist.

Das kombinierte Hardware-/Software-Sytem 1 gewährleistet die moderne Internet-/Intranet-Kommunikation über verschiedene Übertragungsmedien. Das Signal Management & Control System 2 automatisiert die Funkkommunikation auf Schiffen, während das Signal Management & Control System 3 die Funkkommunikation der landgestützten Einheiten organisiert. Alle Systeme 1 bis 3 sind in das MANET-adhoc-Netzwerk 4 eingebunden.

Drahtgebundene Netze und (quasistationäre) Funknetze mit hohen Datenraten wie z.B. Richtfunknetze unterscheiden sich in ihren Eigenschaften erheblich von mobilen taktischen Funknetzen. Herkömmliche eingeführte taktische Funkgeräte stellen derzeit Datenraten bis maximal 16 kbit/s zur Verfügung. Von der neu auf den Markt gekommenen Generation von Funkgeräten werden bis zu 72 kbit/s unterstützt.

Funkgeräte für den taktischen Funk mit Datenraten in der Größenordnung von Mbit/s befinden sich im Entwicklungsstadium. Kommerzielle Lösungen wie zum Beispiel WLAN stellen nur in Sonderfällen eine befriedigende Lösung dar, da sie ausschließlich auf einer voreingestellten Frequenz arbeitet. Der wesentliche Nachteil dieser Lösung ist, dass sie z.B. nicht gegen gezielte Störungen geschützt ist. Weitere Nachteile eines Ein-Kanal-Systems werden bei zukünftigen modernen Breitbandfunkgeräten durch die unten beschriebenen Eigenschaften wie z.B. die Adaption der Wellenform an die variierende Kanalqualität vermieden.

Wellenform ist üblicherweise und auch im Rahmen der vorliegenden Anmeldung der Begriff für das Funksignal in der Luft und enthält z.B. neben der Modulationsart, Datenrate und ggf. Frequenzsprungfolge oder dem Spreizcode auch die Codierung und Verschlüsselung sowie bei modernen Verfahren auch Protokolle.

Die Qualität und damit die Kapazität der Funkkanäle hängt im mobilen Einsatz von der Topologie und der Beschaffenheit des Geländes sowie von der zu überbrückenden Entfernung ab.

Das heißt, dass die verfügbare Kanalkapazität zwischen der maximalen Datenrate eines Breitbandfunkgerätes von z.B. 2 Mbit/s und der eines Schmalbandfunkgerätes von einigen kbit/s variieren kann. Des Weiteren werden die Eigenschaften der Funkkanäle durch physikalische Randbedingungen geprägt. Diese sind z. B.: Dämpfung, Reflexion, Brechung, Beugung, Dopplerverschiebung.

Sie führen zu Empfangsstörungen, Mehrwegeausbreitung und frequenzselektivem und zeitvariantem Schwund. Die davon betroffene Eigenschaft der Funkverbindung ist im Wesentlichen die Signalqualität, die beschrieben wird durch Signal/Störabstand, die durch den Kanal hervorgerufene Signalverzerrung und Signaljitter und davon abgeleitet die Kanalkapazität (Datenrate/Bandbreite), die Bitfehlerrate BER (Bit Error Rate) und die Reichweite.

Die Funknetze können in bestimmten Einsatzfällen, insbesondere bei größeren Abständen der Funkknoten, sog. Engpässe bzw. Flaschenhälse in den Netzen darstellen. Um trotz dieser aus der Mobilität der Funknetze und deren physikalischen Eigenschaften resultierenden temporär möglichen Einschränkungen der Kanalkapazität und -qualität eine befriedigende Nutzung der Netze zu erzielen, sind mehrere Maßnahmen zu untersuchen und in den zukünftigen Netzen zu realisieren.

Wie aus der nicht vorveröffentlichten DE 10 2005 030 108 A1 hervorgeht, sind moderne Funkübertragungssysteme so konzipiert, dass sie sich adaptiv an wechselnde Szenarien von äußerst unterschiedlicher Ausprägung anpassen können. So sind z.B. Szenarien zu erwarten, die eine größere Dichte an miteinander kommunizierenden Funkgeräten mit geringen Abständen aufweisen. Für derartig homogene FunkNetze sind angepasste mobile Ad-Hoc-Netzwerke mit geeigneten Routing-Verfahren eine geeignete Lösung für eine vollständige Erreichbarkeit aller Netzteilnehmer.

Es sind jedoch auch Situationen möglich, in denen ein oder eine geringe Anzahl von Funkknoten über eine große Entfernung an eine zentrale Funkstation anzubinden sind. Eine weiteres Szenario, das ein Mittel zwischen den angeführten Extrema darstellt, sind Netze mit geringerer Dichte und mittleren Funkentfernungen. Des Weiteren werden Übergangsformen zwischen diesen Szenarien möglich sein, z.B. Inseln aus Teilnetzen mit geringeren Funkentfernungen, die über größere Entfernungen Verbindung zu anderen Teilnetzen mit ähnlichen Kenngrößen aufrecht halten sollen.

Werden Funkgeräte mit hoher Übertragungsgeschwindigkeit betrieben, so führt die daraus resultierende notwendige Breitbandigkeit zu erheblich eingeschränkten Funkreichweiten.Entfernt sich im mobilen Einsatz ein Netzteilnehmer aus der Funkreichweite der übrigen Netzteilnehmer, ist er von der Kommunikation abgeschnitten. Da die Netzteilnehmer eine gemeinsame Wellenform nutzen, die auf einer definierten Bandbreite basiert, kann der "abgetrennte" Netzteilnehmer durch einseitige Maßnahmen in der Regel keine Wiederherstellung der Funkverbindung erreichen. Notwendig ist, dass die Funksysteme entsprechende Mechanismen für diese Fälle implementiert haben.

Funkübertragurigssysteme gemäß DE 10 2005 030 108 A1 sind speziell auf den hochmobilen flexiblen Einsatz in unterschiedlichsten Szenarien zugeschnitten. Derartig konzipierte Funksysteme zeichnen sich durch eine hoch entwickelte Adaptionsfähigkeit aus, die das System befähigen, sich an Funkkanäle mit den unterschiedlichsten Kanalqualitäten anzupassen. Allerdings ist in der DE 10 2005 030 108 A1 nicht beschrieben, wie die Funksysteme die Aufgabe lösen, die darin besteht, die geforderten Funkverbindungen aufrecht zu erhalten und die Kanalqualität zu vermessen.

Die US-A-2003/0108016 zeigt ein Verfahren und eine Vorrichtung zum Umschalten zwischen WAN und ad-hoc-Netzwerken für ein mobiles Endgerät in Abhängigkeit der Empfangsqualität eines "Probing"-Signals. Das "Probing"-Signal wird von einem last-hop Knoten des ad-hoc-Netzes gesendet und zeigt so die Verfügbarkeit eines ad-hoc-Kanals.

Von der US-A-2004/0185887 wird ein multimodales Kommunikationsgerät, welches mehrere unterschiedliche Kommunikationsverbindungen zu einer Peer-Unit aufbauen kann, gezeigt. Basierend auf vordefinierten Kriterien, wie z.B. Qualitätsanforderungen wird eine bevorzugte, von der Peer-Unit unterstützte Radio-Schnittstelle ausgewählt. Dabei erfolgt eine Kanalmessung sämtlicher unterstützter Schnittstellen periodisch. Die Auswahl des Kanals wird in Abhängigkeit der Messergebnisse durchgeführt.

Die US-A-2004/0266493 zeigt ein Umschalten zwischen Low-Power und einem High-Power Radio-Schnittstellen eines Multi-Radio-Terminals. Die Umschaltung erfolgt dabei in Abhängigkeit des Kanalzustandes, der angeforderten Bandbreite und/oder des Batterie-Status.

Der vorliegenden Erfindung liegt die Aufgabe zu Grunde, ein Funkübertragungssystem und ein Verfahren zu dessen Betrieb zu schaffen, mit denen die Funkgeräte Funkverbindungen zu den Gegenstellen herstellen oder aufrecht erhalten, die zur Übermittlung der Nachrichten über einen oder mehrere Funkknoten erforderlich sind.

Die Aufgabe wird durch ein Funkübertragungsaystem gemäß Anspruch 1 und ein Verfahren zum Betreiben eines Funkübertragungssystems nach Anspruch 13 gelöst. Die Unteransprüche enthalten vorteilhafte Weiterbildungen der Erfindung.

Ein Ausführungsbeispiel der Erfindung wird im Folgenden anhand der Zeichnung näher beschrieben. In der Zeichnung zeigen:
- Fig. 1: ein Beispiel eines digitalen Gefechtfeldnetzes;
- Fig. 2: ein Blockdiagramm eines im Rahmen der Erfindung verwendbaren Schichtaufbaus des Funkübertragungssystem;
- Fig. 3: die erwarteten Einsatz und Bewegungsräume;
- Fig. 4: homogene MANETs mit geringen Entfernungsvariationen;
- Fig. 5: die Überdehnung der Funkentfernungen in MANETs;
- Fig. 6: das Szenario eines Häuserkampfes;
- Fig. 7: eine Weitverbindung;
- Fig. 8: übergangsformen hochdynamischer Szenarien und
- Fig. 9: ein Ausführungsbeispiel der Konfiguration eines Knotens des erfindungsgemäßen Funkübertragungssystems.

Für das Problem der zeitvarianten Qualität und Kapazität von Funkkanälen wird in der DE 10 2005 030 108 A1 ein Paket bestehend aus drei Lösungen vorgeschlagen:
- Optimierung der Qualität und Kapazität der einzelnen Funk-Links
- Angepasste und optimierte Routenwahl
- Auswahl geeigneter Applikationen und/oder Adaption von Applikationen

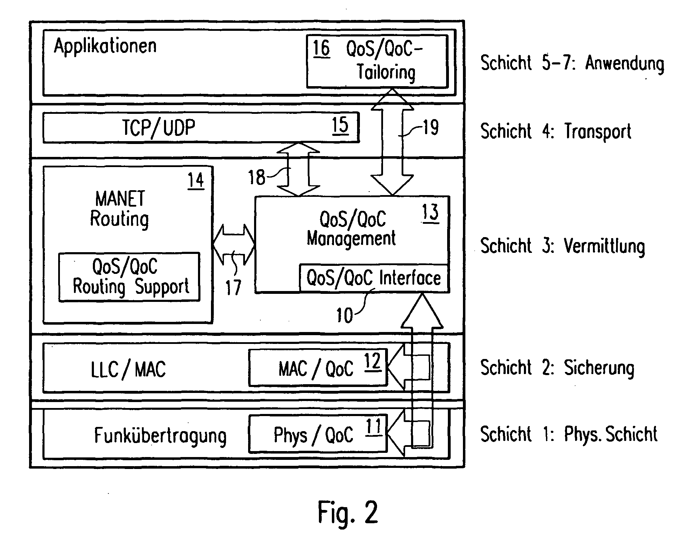

Dazu sieht der Lösungsansatz gemäß DE 10 2005 030 108 A1, wie in Fig. 2 dargestellt, eine Aufgabenteilung zwischen dem Bereich der klassischen Funktechnik (Schichten 1 und 2 des ISO/OSI-Schichtenmodells) und der Netzwerk-Technik (Schicht 3 und höher) und eine Kooperation der beiden Bereiche vor. Zwischen diesen Bereichen ist eine Schnittstelle 10 vorgesehen, über die Qualitätsmerkmale und ggf. Steuerdaten ausgetauscht werden können, wobei die Steuerdaten als Reaktion auf die ausgetauschten Qualitätsmerkmale erzeugt werden.

Unterhalb der Schnittstelle 10, d.h. im klassischen Funk-Bereich, müssen im Block 11 der Schicht 1 Maßnahmen (Phys/QoC) ergriffen werden, den Funkkanal zu analysieren und entsprechende Qualitätsmerkmale festzulegen, sowie die Funkkanäle durch adaptive Maßnahmen an die jeweilige topographische Situation anzupassen.

Die Qualitätsmerkmale dazu werden in Anlehnung an die für Netzwerke definierte Qualität eines Dienstes QoS (Quality of Service) im Folgenden QoC (Quality of Channel) genannt. Sie werden im Funktionsblock 11 (Phys/QoC) erarbeitet.

Zusätzlich müssen Funktionen (MAC/QoC) vorgesehen werden, den Kanalzugriff (z.B. Link Management, Slot Multiplexing) und den Datenfluss steuern zu können und zwar in Abhängigkeit von der aktuellen Kanalqualität und von der Priorität der Pakete und ihren Anforderungen an die Kanalqualität (Class of Service, CoS). Dies erfolgt im Funktionsblock 12 (MAC/QoC) der Schicht 2. Die Priorität der Pakete kann entweder service- oder/und nutzerbezogen festgelegt werden. Dies erfolgt ebenfalls im Funktionsblock 12 (MAC/QoC).

Oberhalb der QoC - QoS - Schnittstelle 10, also im Netzwerk - Bereich, müssen Wege gefunden werden, die Kommunikation mit Hilfe dieser QoC-Werte an die Eigenschaften der zu nutzenden Kanäle anzupassen.

Im Funktionsblock 13 der Schicht 3 (QoC/QoS - Management) müssen z. B. folgende Maßnahmen ergriffen werden:
- Sortierung der Datenpakete nach Priorität (MAC/QoC)
- angepasstes Queuing (MAC/QoC), d. h. Bildung von Warteschlangen je nach Priorität
- Unterstützung der MANET-Funktionen (QoS/QoC Routing Support), z.B. durch
   - Reichweitenberechnung mit Hilfe digitalisierter Karten
   - Verbindungsanalyse mit Hilfe ausgetauschter Ortskoordinaten
   - Verbindungsprognosen mit Hilfe der Geschwindigkeitsvektoren der die Funkstationen beinhaltenden Objekte
   - Ermittlung der Qualitätsmerkmale für die einzelnen Links durch die Funkgeräte
   - Kennzeichnung der Pfadqualitäten in den Routing-Tabellen
- Umsetzung der QoC-Werte in die QoS-Werte und Anpassung an IP-Funktionalität (Anpassung an TCP/UDP)
- Hinweis an den Nutzer über die verfügbare Kanalqualität und -kapazität (QoS/QoC Tailoring) und Anzeige der verfügbaren Dienste
- Anpassung der Applikationen an die verfügbare Kanalqualität und -kapazität (QoS/QoC Tailoring)
- Reaktionen und Maßnahmen bezüglich der Kanalkapazität z.B. Priorisierung, Datenreduktion oder Abbruch, was auf der Ebene der Anwendung im Funktionsblock 16 (QoS/QoC Tailoring) umgesetzt wird.

Zur Koordination der Maßnahmen unterhalb und oberhalb der Schnittstelle 10 müssen die QoC- und QoS - Kenngrößen aufeinander abgebildet werden. Dies ist auch deswegen erforderlich, damit ein bruchfreier Übergang zwischen Funknetzen und leitungsgebundenen Netzen erfolgen kann, d.h., dass die für leitungsgebundene Netze definierten Dienstmerkmale (QoS - Mechanismen) auch in Funknetzen umgesetzt werden.

Es sind sowohl der Kanalzugriff (Medium Access, MAC), das MANET - Routing im Funktionsblock 14 der Schicht 3 als auch die Transport-Protokolle TCP/UDP, in welche die Daten im Funktionsblock 15 der Schicht 4 umgesetzt werden, und die Applikationen der Schichten 5 bis 7 betroffen. Deswegen muss die QoC/QoS - Abbildung um zusätzliche Funktionen erweitert werden, was in einem Funktionsblock 13 (QoC/QoS - Management) erfolgt. Dazu ist der Funktionsblock 13 über weitere Schnittstellen 17, 18 und 19 mit den Funktionsblöcken 14, 15 und 16 verbunden.

Die Funktion des in Fig. 2 dargestellten Funkübertragungssystems lässt sich somit wie folgt erläutern:

Das Funkübertragungssystem hat mehrere Bearbeitungsschichten zur Übertragung von Datenpaketen zwischen verschiedenen Funkgeräten in einem Funkkanal und umfasst mehrere Funktionseinheiten und eine Steuereinheit. Eine erste Funktionseinheit 11 ist in einer physikalischen Funkübertragungs-Schicht lokalisiert und analysiert den Funkkanal, um die Qualität des Funkkanals QoC festzustellen.

Eine zweite Funktionseinheit 12 ist in einer Datensicherungs-Schicht lokalisiert und steuert den Zugriff auf den Funkkanal in Abhängigkeit von der aktuellen Qualität des Funkkanals QoC und der Priorität der zu übertragenden Datenpakete je nach Qualität QoS des durch die Datenpakete realisierten Dienstes. Eine dritte Funktionseinheit 14 ist in einer Vermittlungs-Schicht lokalisiert und steuert die Vermittlung der Datenpakete.

Eine übergeordnete Steuereinheit 13 gibt die Datenpakete nur dann zur Vermittlung durch die dritte Funktionseinheit 14 frei, wenn die Qualität QoS des durch die Datenpakete realisierten Dienstes mit der in der ersten Funktionseinheit 11 festgestellten Qualität des Funkkanals QoC hinreichend korrespondiert, d. h. wenn für die Qualität QoS des Dienstes bzw. Dienstmerkmals der Anwendung eine Mindest-Qualität QoC des Funkkanals vorliegt.

Die Steuereinheit 13 ist mit der ersten Funktionseinheit 11 und mit der zweiten Funktionseinheit 12 über eine erste Schnittstelle 10 und mit der dritten Funktionseinheit 14 über eine zweite Schnittstelle 17 verbunden.

Ferner ist die Steuereinheit 13 vorzugsweise über eine dritte Schnittstelle 18 mit einer vierten Funktionseinheit 15 in einer Transport-Schicht verbunden. Die vierte Funktionseinheit 15 setzt die Datenpakete in ein entsprechendes Transport-Protokoll, z. B. TCP/UDP, um.

Die Steuereinheit 13 legt das entsprechende Transport-Protokoll TCP/UDP auf der Grundlage der Qualität QoS des durch die Datenpakete realisierten Dienstes und der in der ersten Funktionseinheit 11 festgelegten Qualität QoC des Funkkanals fest und steuert die vierte Funktionseinheit entsprechend an.

Die Steuereinheit 13 steht vorzugsweise über eine vierte Schnittstelle 19 mit einer fünften Funktionseinheit 16 in einer Anwendungs-Schicht in Verbindung. Wenn die Datenpakete zur Vermittlung durch die dritte Funktionseinheit 14 nicht freigegeben werden können, wird von der fünften Funktionseinheit 16 vorzugsweise eine entsprechende Meldung an den Benutzer ausgegeben. Den Benutzern können dabei auch alle derzeit verfügbaren Dienste angezeigt werden.

Die Steuereinheit 13 steuert dabei die dritte Funktionseinheit 14 so an, dass diese durch geeignete Vermittlung (Routing) die für die jeweilige Qualität QoS des durch die Datenpakete realisierten Dienstes benötigte Übertragungskapazität des Funkkanals zur Verfügung stellt.

Die Steuereinheit 13 nimmt vorzugsweise eine Sortierung der Datenpakete je nach der von der jeweiligen Qualität QoS des durch die Datenpakete realisierten Dienstes geforderten Priorität vor. Danach wird die dritte Funktionseinheit 14 zur Durchführung der Vermittlung der Datenpakete in dieser Reihenfolge angesteuert.

Die Steuereinheit 13 kann auch eine Prognose der sich entwickelnden zukünftigen Qualität des Funkkanals auf der Grundlage von ermittelten Geschwindigkeitsvektoren der sich bewegenden Funkgeräte vornehmen.

Zusammenfassend lässt sich dieser Lösungsansatz der DE 10 2005 030 108 A1 so beschreiben, dass die im mobilen Einsatz notwendige permanente Ermittlung möglicher Pfade (Funkwege) des Netzes (MANET) durch intelligente Verfahren unterstützt wird. Die Funkkanäle werden durch adaptive Maßnahmen an die jeweilige topographische Situation angepasst und die jeweilige Kanalkapazität und -qualität der einzelnen Funkstrecken werden aufgezeichnet und beim Transport der Datenpakete entsprechend berücksichtigt.

Allerdings können mit diesem Lösungsansatz der DE 10 2005 030 108 A1 Funkverbindungen nur über begrenzte Funkentfernungen aufrecht erhalten werden. In Szenarien, bei denen größere Funkentfernungen überbrückt werden müssen, sind zusätzliche Maßnahmen erforderlich, die im Folgenden beschrieben werden.

Die Reichweite von Funksystemen bei Boden-Boden-Verbindungen wird von folgenden Größen bestimmt: Sie ist umso geringer, je höher die Nutzfrequenz ist. Sie ist umso geringer, je höher die Datenrate bzw. Nutzbandbreite bzw. je hochwertiger die verwendete Modulationsart ist. Sie ist umso größer, je größer die Sendeleistung ist. Sie ist umso größer, je höher der Antennengewinn ist. Sie ist umso größer, je höher der Antennenfußpunkt ist.

Im stationären Betrieb können die drei letzten Funkparameter, nämlich die Antennenhöhe, der Antennengewinn und die Sendeleistung zur Überbrückung größerer Funkentfernungen vergrößert werden. Im mobilen Einsatz ist dies nur sehr eingeschränkt oder überhaupt nicht möglich, sieht man von dem technisch und operationell sehr fragwürdigen Einsatz von luftgestützten Relaisstationen wie unbemannten Flugkörpern, Ballons, Hubschraubern etc. ab. Aus diesem Grund muss für den mobilen Einsatz eine Lösung gefunden werden, die es auch Funksystemen mit einfachen und niedrigen Antennen und geringer Sendeleistung, z.B. Manpacks, ermöglicht, die Veränderung der Kanalqualität zu ermitteln und auf die Überdehnung von Funkdistanzen zu reagieren.

Die Kanalqualität kann permanent durch die Analyse des genutzten Funkkanals verfolgt werden. Diese Analyse kann sowohl bei einem Kanal ohne Funkverkehr als auch bei einem belegten Kanal erfolgen. Im ersten Fall können Größe und Art der Störsignale ermittelt und aufgezeichnet werden, im zweiten Fall werden die Nachrichtensignale analysiert. Da es sich dabei um bekannte technische Parameter wie z.B. die Modulationsart, Datenrate etc., handelt, kann die Analyse des Kanals sehr detailliert erfolgen hinsichtlich von Qualitätskriterien wie Signal-Stör-Abstand, Fading-Kenngrößen, Bitfehlerrate etc. Da ein Funkknoten üblicherweise die Signale von mehreren Gegenstellen empfangen wird, können diese Qualitätsmerkmale den individuellen Funkstrecken im Netzverbund zugeordnet werden.

Mit dieser Methode kann z.B. an Hand der Signalfeldstärke auf die Entfernung der Gegenstelle geschlossen werden. Werden im Netzbetrieb auch die Koordinaten der Standorte der Funkknoten ausgetauscht, können die Entfernungen berechnet und mittels Geländekarten und Ausbreitungsmodellen die Erreichbarkeit und die dazu notwendigen Funkparameter bestimmt werden.

Moderne breitbandige Funkgeräte werden Datenraten von bis zu einigen Mbit/s und damit Bandbreiten von mehreren MHz nutzen. Diese Übertragung wird aus mehreren Gründen in höheren Frequenzbereichen, z.B. im Bereich von einigen Hundert MHz oder bis in den GHz-Bereich hinein, erfolgen. Allerdings ist die damit überbrückbare Funkentfernung recht gering. Unter ungünstigen Bedingungen kann sie bis auf einige 100 m eingeschränkt sein. Forderungen nach einer Überbrückung einer Reichweite von einigen 10 km könnten in diesem Frequenzbereich auch mit sehr schmalen Nutzbandbreiten nur durch hoch liegende Relaisstationen überbrückt werden.

Verändert sich die Kanalqualität, kann an Hand dieser Analyseergebnisse mit einer Adaption der Funkparameter auf diese Veränderung reagiert werden, z.B. mit einer Anpassung der Signalbandbreite und der zugehörigen Datenrate oder der Änderung der Modulationsart bzw. Codierung. Durch Verteilung der Kanalinformation im Netz kann jeder Funkknoten die für die Kommunikation mit einem Partner optimalen Funkparameter wählen, insbesondere, wenn zusätzlich die Positionen der Funkknoten durch Austausch der Koordinaten bekannt sind.

Allerdings greifen diese Methoden nicht, wenn die Adaptionsfähigkeit der benutzten Wellenform bei der gewählten (höheren) Nutzfrequenz an die aktuelle Funkentfernung erschöpft wird. In diesem Fall müssen, wie oben ersichtlich, Nutzfrequenz und -bandbreite erheblich niedriger werden. Mit herkömmlichen taktischen Funkverfahren können beispielsweise mit einer Nutzbandbreite von 25 kHz im VHF-Bereich von 30 - 88 MHz je nach Gelände Funkreichweiten von bis zu einigen 10 km überbrückt werden. Die Nutzung des HF-Bereichs mit den dort üblichen Bandbreiten von z.B. 3 kHz erlaubt noch größere Funkreichweiten.

Befindet sich ein Funkknoten in einer aktuellen Funkentfernung, die nicht mehr, auch nicht bei Adaption, mit der benutzten Wellenform überbrückt werden kann, so bleibt als Ultima Ratio erfindungsgemäß nur noch die Verwendung schmalbandiger Verfahren in einem niedrigeren Frequenzbereich, d.h. die erfindungsgemäße Nutzung eines so genannten Orientierungskanals. Bandbreite und Frequenzbereich dieser Verfahren richten sich nach den maximal zu erwartenden Funkentfernungen in den jeweiligen Einsatzszenarien. Da der Zeitpunkt der Überdehnung der Funkstrecken nicht a priori vorhersehbar ist, sollten die Funkknoten vorteilhaft permanent für derartige Signale empfangsbereit sein. Alternativ könnte bei Bekanntsein der Kanalqualität durch Absprache im Netz demjenigen Funkknoten, der mit großer Wahrscheinlichkeit nicht mehr erreichbar sein wird, dieser Orientierungskanal zugeordnet werden. Kommunikation im Netz zu diesem Knoten wird dann über diesen Kanal durchgeführt; der nicht mehr erreichbare Knoten wird dann über diesen Orientierungskanal kommunizieren. Die Funkknoten müssen daher nur für den Fall, dass ein oder mehrere Funknoten mit dem Übertragungsverfahren mit hoher Datenrate im ad-hoc-Netzwerk nicht mehr erreichbar sein, für den Orientierungskanal empfangsbereit sein.

Diese Empfangsbereitschaft kann auf unterschiedliche Weise realisiert werden. Mögliche Lösungen sind: Zyklisches Umschalten des Funkknotens zum Empfang eines Orientierungssignals und/oder Nutzung eines separaten Empfängers für den Empfang eines Orientierungssignals und/oder Nutzung eines integrierten Software-Guard-Empfängers für den Empfang eines Orientierungssignals und/oder Nutzung eines integrierten Hardware-Guard-Empfängers für den Empfang eines Orientierungssignals.

Dieses Orientierungssignal ist so ausgelegt, dass es die für die erwarteten Szenarien maximale Reichweite überbrücken kann. Wird es benutzt, so kann die das orientierungssignal empfangene Station mit der oben beschriebenen Methode der Analyse eines Nutzsignals die Kanaleigenschaften bestimmen und daraus die für die vorliegende Funkentfernung maximal nutzbare Bandbreite extrapolierend bestimmen.

Der Vorteil der vorliegenden Erfindung besteht darin, mit adaptiven Funkgeräten alle Funkreichweiten, soweit physikalisch möglich, abdecken zu können.

Dazu braucht man die bereits oben erwähnte permanente Analyse des Nutzkanals, z.B. durch eine Analyse eines Kanals ohne Funkverkehr mit Ermittlung und Aufzeichnung von Größe und Art der Störsignale und/oder eine Analyse der Nachrichtensignale eines belegten Kanals mit Analyse des Konstellationsdiagramms und/oder Analyse Signal-Stör-Abstand und/oder Analyse Fading-Kenngrößen und/oder. Analyse Bitfehlerrate und Zuordnung der Analyseergebnisse zu den individuellen Funkstrecken im Netzverbund.

Das Verfahren zur Aufrechterhaltung von Funkverbindungen mittels permanenter Analyse des Funkkanals und Verteilen der Kanalparameter im Funknetz dient zur adaptiven Einstellung der Wellenform (z. B. Modulationsart, Art der Codierung, Signalbandbreite und Sendeleistung, Antennenrichtwirkung).

Das Verfahren zur Herstellung und Aufrechterhaltung von Funkverbindungen mittels schmalbandigem und robustem Orientierungskanal dient in dem Fall, dass die normale Kommunikation über die adaptive Standard Wellenform nicht mehr möglich ist, da sich die Kanalparameter verschlechtert haben sowie der Aufnahme der Kommunikation eines Teilnehmers in einem Netz bei unbekannten Kanalparametern.

Die Eigenschaften der Orientierungskanals sind insbesondere: niedrige Frequenz, kleine Bandbreite, robustes Modulationsverfahren und Codierung sowie ggf. eine höhere Sendeleistung im Vergleich zum eigentlichen Nutzkanal.

Die Illustration der Fig. 1 dient zur Veranschaulichung zukünftiger Funkvernetzung. Sie stellt jedoch eine starke Vereinfachung dar und beschreibt die tatsächlich zu erwartenden Umgebungen nur unzureichend. Die dargestellten Bedingungen, d. h. das Gelände ist ausgesprochen einfach und überschaubar, die Funkentfernungen sind äußerst gering, die Dichte der Funknoten ist hoch, stationäre Anlagen mit hohen Antennen sind vorhanden und es stehen luftgestützte Relaisstationen zur Verfügung, beschreiben nicht ausreichend die realen Situationen und möglichen Leistungsmerkmale modernern Funksysteme. In praxi handelt es sich, besonders beim Vormarsch der Truppen oder bei mobilen Kampfhandlungen, um große Räume, die durch Funk abgedeckt werden müssen.

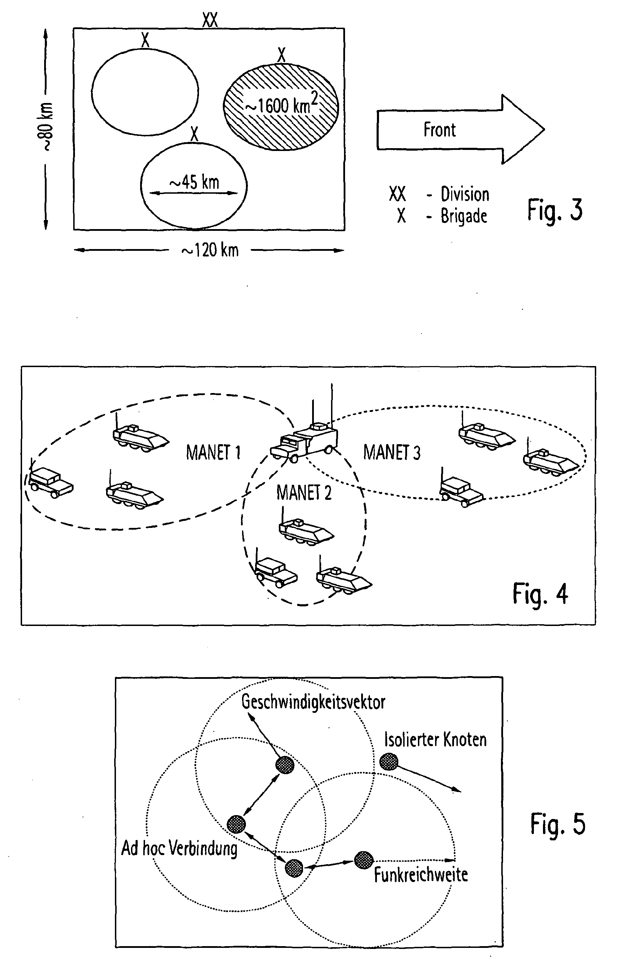

Fig. 3 zeigt die im Divisions- und Brigaderahmen erwarteten Einsatz- und Bewegungsräume. Die Verteilung von Funkknoten in diesen Räumen kann nun keineswegs immer als quasi homogen mit geringen Funkentfernungen erwartet werden. Häufig kann es auch zur Inselbildung von Funknetzen mit größeren Abständen zwischen diesen Inseln kommen. Die dynamischen mobilen flexiblen Einsatzmöglichen spiegeln sich in einer Vielzahl möglicher Szenarien wieder, in denen die Funksysteme eine sichere Kommunikation ermöglichen sollen. Der Rahmen dieser Szenarienvielfalt soll an Hand einiger repräsentativer Beispiele abgesteckt werden.

Wie Fig. 4 zeigt, existieren Szenarien, die eine größere Dichte an miteinander kommunizierenden Funkgeräten mit geringen Abständen aufweisen. Für derartig homogene FunkNetze sind angepasste mobile Ad-Hoc-Netzwerke mit geeigneten Routing-Verfahren eine geeignete Lösung.

Im mobilen Einsatz kommt es zwangsläufig zu Situationen, in denen größere Entfernung von Stationen zu ihren MANETs oder zwischen den MANETS auftreten, die nicht mehr durch die Funkreichweite einer breitbandigen Wellenform überbrückt werden können.

Entfernt sich, wie in Fig. 5 veranschaulicht, im mobilen Einsatz ein Netzteilnehmer aus der Funkreichweite der übrigen Netzteilnehmer, ist er von der Kommunikation abgeschnitten. Wenn die Netzteilnehmer eine gemeinsame, nicht adaptive Wellenform nutzen, die auf einer definierten Bandbreite basiert, kann der "abgetrennte" Netzteilnehmer durch einseitige Maßnahmen in der Regel keine Wiederherstellung der Funkverbindung erreichen.

Es sind jedoch auch Situationen möglich, in denen ein oder eine geringe Anzahl von Funkknoten über eine große Entfernung oder in einem Gelände mit ungünstigen Ausbreitungsbedingungen an eine zentrale Funkstation anzubinden sind.

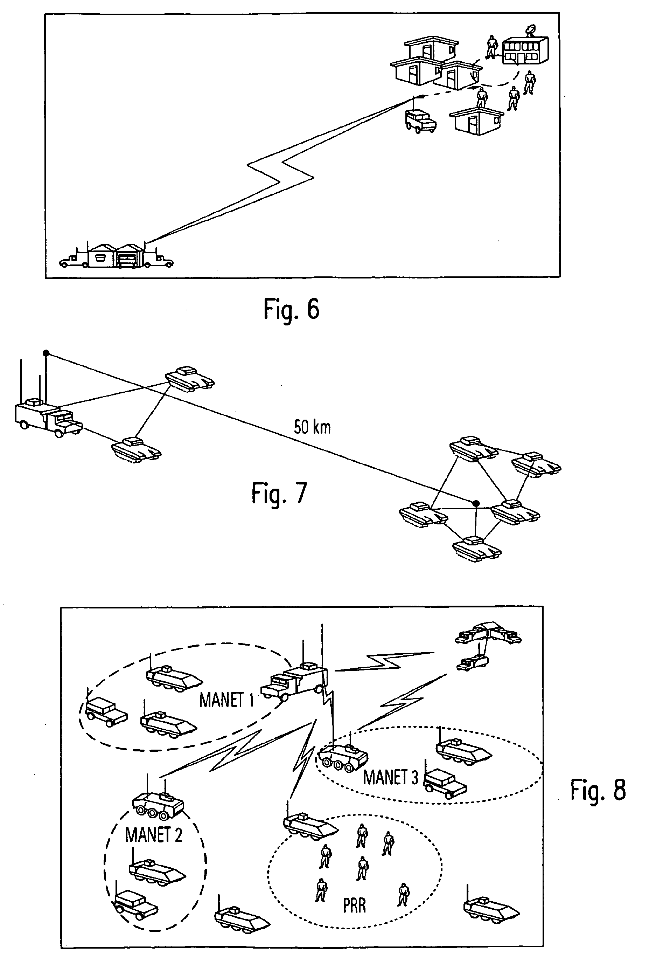

Diese Situation findet man z.B., wie in Fig. 6 gezeigt im Häuserkampf, bei Spähtrupps oder Patrouillen. Besonders im letzten Fall sind bei Fahrten durch zu kontrollierendes Gebiet große Entfernungen zur zentralen Funkstation, z.B. dem Kompaniegefechtsstand, möglich, was in Fig. 7 veranschaulicht ist. Es ist aber erforderlich, dass die Patrouille auch in diesen Fällen Funkverbindung zur Basisstation hat oder herstellen kann. Bei Fahrten in schwierigem Gelände, z.B. im Bergland, oder bei Entfernungen, die deutlich die üblicherweise mit taktischem Funk abdeckbare Reichweite von ca. 20 km übersteigen, werden besondere Maßnahmen erforderlich werden.

Des Weiteren werden Übergangsformen zwischen diesen Szenarien möglich sein, z.B. Inseln aus Teilnetzen mit geringeren Funkentfernungen, die über größere Entfernungen Verbindung zu anderen Teilnetzen mit ähnlichen Kenngrößen aufrecht halten sollen.

Fig. 8 soll verdeutlichen, welche Mischformen von Szenarien möglich sind. In den Teilnetzen (MANET 1, 2, 3, PRR;Personal Role Radio) besteht eine Verbindung, sie sind jedoch räumlich so weit getrennt, dass die Verbindung zwischen den Teilnetzen nicht mehr mit der innerhalb des MANETs genutzten Wellenform möglich ist. Die beiden Fahrzeuge außerhalb der MANETs sind auf Grund ihrer großen Entfernung von den Teilnetzen aus nicht mehr erreichbar.

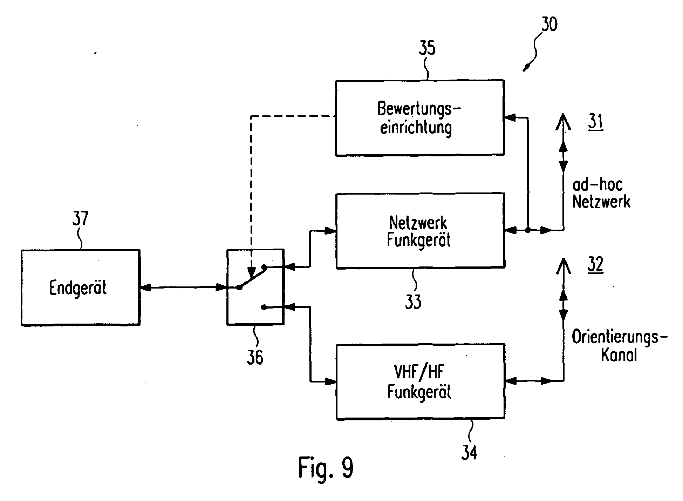

Fig. 9 zeigt einen Knoten 30 des erfindungsgemäßen Funkübertragungssystems. Das Funkübertragungssystem umfasst das vorstehend beschriebene ad-hoc-Netzwerk 31 und einen Orientierungskanal 32, wobei jeder Knoten 30 sowohl mit dem ad-hoc-Netzwerk 31 als auch mit dem Orientierungskanal 32 in Verbindung steht.

Bei dem in Fig. 9 dargestellten Ausführungsbeispiel ist zur Kommunikation über das ad-hoc-Netzwerk ein Netzwerk-Funkgerät 33 und zur Kommunikation über den Orientierungskanal 32 ein VHF-(Very High Frequency-Bereich, 30 MHz - 88 MHz) und/oder ein HF-Funkgerät (für den HF-Bereich, 10 MHz - 30 MHz) vorhanden. Über das Netzwerk-Funkgerät 33 wird auf den Kanälen des ad-hoc-Netzwerks 31, der sich z. B. im SHF-Bereich von einigen GHz befindet, kommuniziert, während über das VHF/HF-Funkgerät mit dem Orientierungskanal 32, der sich vorzugsweise dem HF-Bereich, also Kurzwellenbereich, bzw. VHF-Bereich befindet, kommuniziert. Wenn sich der Orientierungskanal 32 auf einer niedrigeren Frequenz als das ad-hoc-Netzwerk 31 befindet, führt dies in der Regel zu einer größeren Reichweite, so dass Funknoten, die über das ad-hoc-Netzwerk 31 nicht mehr erreicht werden, über den Orientierungskanal 32 noch kommunizieren können.

Es ist nicht zwingend erforderlich, dass das Netzwerk-Funkgerät 33 und das Funkgerät 34 für den Orientierungskanal voneinander getrennt sind. Vielmehr kann das Funkgerät 34 für den Orientierungskanal auch als Hardware-Komponente oder Software-Komponente in das Netzwerk-Funkgerät 33 integriert sein.
Weiterhin ist es möglich, dass das Netzwerk-Funkgerät einfach durch Kommandierung in den Frequenzbereich des Orientierungskanals geschaltet wird. In diesem Fall verarbeitet dieses Funkgerät auch den Orientierungskanal. In dieser Ausprägung kann der Orientierungskanal nur abwechselnd mit dem Nutzkanal betrieben werden.

Eine Bewertungseinrichtung 35 bewertet ständig die Qualität der Übertragung der Datenpakete über das ad-hoc-Netzwerk 31. Sofern die Übertragung über das ac-hoc-Netzwerk 31 nicht mehr zufriedenstellend ist, wird eine Umschalteinrichtung 36 so umgeschaltet, dass das Endgerät 37 nicht mehr über das Netzwerk-Funkgerät 33, sondern über das Funkgerät 34 für den Orientierungskanal kommuniziert. Die Bewertung der Qualität der Datenpakete, die auf dem ad-hoc-Netzwerk 31 übertragen werden, kann in vielfältiger Weise geschehen. Beispielsweise kann, wie bereits erwähnt, eine Analyse des Konstellationsdiagramms und/oder des Signal-Störabstands und/oder von Fading-Kenngrößen und/oder der Bitfehlerrate durchgeführt werden.

Die Bewertungseinrichtung 35 bewertet einen nicht mit Funkverkehr belegten Kanal des ad-hoc-Netzwerks 31 sinnvoller Weise durch Ermittlung der Größe und/oder Art der Störsignale auf diesem Kanal. Ein mit Funkverkehr belegter Kanal des ad-hoc-Netzwerks 31 wird durch die Bewertungseinrichtung 35 dagegen sinnvoller Weise durch eine Analyse der Nachrichtensignale der auf diesem Kanal übertragenen Datenpakete bewertet.

Ferner ist es sinnvoll, wenn die Umschalteinrichtung 36 so betrieben wird, dass zyklisch auf den Orientierungskanal 32 auch dann umgeschaltet wird, wenn die Bewertungseinrichtung 35 die Übertragung über das ad-hoc-Netzwerk 31 als qualitativ ausreichend bewertet. Dies hat den Vorteil, dass Funknoten 30 des Netzwerks beim zyklischen Umschalten auf den Orientierungskanal 32 feststellen können, ob dort ein anderer Knoten sendet, der über das ad-hoc-Netzwerk 31 nicht mehr erreicht werden kann. Ein solcher Knoten 30 der beim zyklischen Umschalten feststellt, dass er mit dem anderen Knoten über den Orientierungskanal 32 kommunizieren kann, kann die Daten dieses von dem ad-hoc-Netzwerk 31 isolierten Knotens dann wieder in das ad-hoc-Netzwerk 31 einspeisen und so die Kommunikation mit dem isolierten Knoten aufrechterhalten.

Es ist sinnvoll, wenn über den Orientierungskanal 32 mit einer robusten, d. h. in der Regel niedrigerwertigen Modulationsart, beispielsweise niederwertige PSK (Phase Shift Keying) oder FSK (Frequency Shift Keying) als über das ad-hoc-Netzwerk 31 kommuniziert wird. Auch ist es sinnvoll, wenn für die Kommunikation über den Orientierungskanal 32 einen verbesserten Fehlerschutz, der dann eine niedrigere Nutzdatenrate bedingt, als für die Kommunikation über das ad-hoc-Netzwerk 31 eingesetzt wird. Auch sollte für die Kommunikation über den Orientierungskanal 32 eine niedrigere Datenrate als für die Kommunikation über das ad-hoc-Netzwerk 31 verwendet werden. Gegebenenfalls kann für die Kommunikation über den Orientierungskanal auch eine höhere Sendeleistung als für Kommunikation über das ad-hoc-Netzwerk 31 verwendet werden.

Der Orientierungskanal kann zusätzlich dazu verwendet werden, die Identität und Position von potentiell in das MANET integrierbare Funkknoten abzufragen. Hierzu kann der abfragende Funkknoten entweder einmalig, z.B. durch den Bediener initiiert, oder auch zyklisch, z.B. jede Sekunde, eine entsprechende Nachricht auf dem Orientierungskanal aussenden. Ein empfangender Funkknoten kann dann auf diese Nachricht im orientierungskanal antworten. Damit ist es auch möglich, Funkgeräte, die nicht über die MANET-Funktionalität verfügen, jedoch den Orientierungskanal empfangen und auf diesem auch wieder aussenden können, zu identifizieren. Die Verwendung des Orientierungskanals ist hierzu in besonderer Weise vorteilhaft, da er, wie bereits erwähnt, über eine größere Reichweite verfügt und damit das MANET auch Kenntnis über außerhalb seiner Reichweite befindliche Funkgeräte erhalten kann. Diese Kenntnis kann beispielsweise zur Freund-Feind-Erkennung verwendet werden.

Die Erfindung ist nicht auf das dargestellte Ausführungsbeispiel beschränkt. Gegebenfalls kann der Orientierungskanal auch ein bestimmter Kanal des ad-hoc-Netzwerks sein, der als allgemeiner Anrufkanal (Hailing-Kanal) ausgestattet sind. Alle vorstehend beschriebenen Merkmale sind im Rahmen der Erfindung beliebig miteinander kombinierbar.

## Patentansprüche

1. Funkübertragungssystem mit
einem ad-hoc-Netzwerk (31) mit mehreren Knoten (30), über welches Datenpakete mit einer vorgegebenen Wellenform übertragen werden,
einer Bewertungseinrichtung (35) für jeden Knoten (30), welche die Qualität der Übertragung der Datenpakete über das ad-hoc-Netzwerk (31) bewertet, und
einem Orientierungskanal (32), über welchen die Datenpakete dann übertragen werden, wenn die Bewertungseinrichtung (35) die Qualität der Übertragung der Datenpakete über das ad-hoc-Netzwerk (31) als ungenügend bewertet hat,
wobei der Orientierungskanal (32) ein Kanal ist, welcher nicht Teil des ad-hoc-Netzwerks (31) ist,
**dadurch gekennzeichnet,**
**dass** jeder Knoten (30) des Funkübertragungssystems eine Umschalteinrichtung (36) aufweist, die den Empfang
auch dann zyklisch zwischen einer Frequenz des ad-hoc-Netzwerks (31) und der Frequenz des Orientierungskanals (32) umschaltet, wenn die Bewertungseinrichtung (35) die Übertragung über das ad-hoc-Netzwerk (31) als qualitativ ausreichend bewertet.

2. Funkübertragungssystem nach Anspruch 1,
**dadurch gekennzeichnet,**
**dass** der Orientierungskanal (32) eine niedrigere Übertragungsfrequenz als das ad-hoc-Netzwerk (31) hat.

3. Funkübertragungssystem nach Anspruch 1 oder 2,
**dadurch gekennzeichnet,**
**dass** der Orientierungskanal (32) eine robustere Modulationsart als das ad-hoc-Netzwerk (31) hat.

4. Funkübertragungssystem nach einem der Ansprüche 1 bis 3,
**dadurch gekennzeichnet,**
**dass** der Orientierungskanal (32) eine niederwertigere Codierung als das ad-hoc-Netzwerk (31) hat.

5. Funkübertragungssystem nach einem der Ansprüche 1 bis 4,
**dadurch gekennzeichnet,**
**dass** der Orientierungskanal (32) einen verbesserten Fehlerschutz und/oder eine bessere Codierung als das ad-hoc-Netzwerk (31) hat.

6. Funkübertragungssystem nach einem der Ansprüche 1 bis 5,
**dadurch gekennzeichnet,**
**dass** der Orientierungskanal (32) eine höhere Sendeleistung als das ad-hoc-Netzwerk (31) hat.

7. Funkübertragungssystem nach einem der Ansprüche 1 bis 6,
**dadurch gekennzeichnet,**
**dass** die Bewertungseinrichtung (35) einen nicht mit Funkverkehr belegten Kanal des ad-hoc-Netzwerks (31) durch Ermittlung der Größe und/oder Art der Störsignale auf dem Kanal bewertet.

8. Funkübertragungssystem nach einem der Ansprüche 1 bis 7,
**dadurch gekennzeichnet,**
**dass** die Bewertungseinrichtung (35) einen mit Funkverkehr belegten Kanal des ad-hoc-Netzwerks (31) durch eine Analyse der Nachrichtensignale der auf dem Kanal übertragenen Datenpakete bewertet.

9. Funkübertragungssystem nach Anspruch 8,
**dadurch gekennzeichnet,**
**dass** die Bewertungseinrichtung (35) eine Analyse des Konstellationsdiagramms und/oder des Signal-Stör-Abstands und/oder von Fading-Kenngrößen und/oder der Bitfehlerrate durchführt.

10. Funkübertragungssystem nach einem der Ansprüche 1 bis 9,
**dadurch gekennzeichnet,**
**dass** für die Aussendung auf dem Orientierungskanal und/oder für den Empfang des Orientierungskanals ein Netzwerk-Funkgerät verwendet wird.

11. Funkübertragungssystem nach einem der Ansprüche 1 bis 10,
**dadurch gekennzeichnet,**
**dass** jeder Knoten (30) des Funkübertragungssystems für den Empfang des Orientierungskanals (32) einen separaten Sende-Empfänger (34) hat.

12. Funkübertragungssystem nach einem der Ansprüche 1 bis 10,
**dadurch gekennzeichnet,**
**dass** jeder Knoten (30) des Funkübertragungssystems für den Empfang des Orientierungskanals (32) ein Hardware- oder Software-Modul hat, das in einem zum Knoten (30) gehörigen Netzwerkfunkgerät integriert ist.

13. Verfahren zum Betreiben eines Funkübertragungssystems mit einem ad-hoc-Netzwerk (31), über welches Datenpakete mit einer vorgegebenen Wellenform übertragen werden, und mit einem Orientierungskanal (32),
wobei die Qualität der Übertragung der Datenpakete über das ad-hoc-Netzwerk (31) ständig bewertet wird und die Datenpakete über den Orientierungskanal (32) dann übertragen werden, wenn die Qualität der Übertragung der Datenpakete über das ad-hoc-Netzwerk (31) als ungenügend bewertet wird,
wobei der Orientierungskanal (32) ein Kanal ist, welcher nicht Teil des ad-hoc-Netzwerks (31) ist,
**dadurch gekennzeichnet,**
**dass** an jedem Knoten (30) des Funkübertragungssystems der Empfang zyklisch zwischen einer Frequenz des ad-hoc-Netzwerks (31) und der Frequenz des Orientierungskanals (32) auch dann umgeschaltet wird, wenn die Bewertungseinrichtung (35) die Übertragung über das ad-hoc-Netzwerk (31) als qualitativ ausreichend bewertet.

14. Verfahren nach Anspruch 13,
**dadurch gekennzeichnet,**
**dass** der Orientierungskanal (32) mit einer niedrigeren Übertragungsfrequenz als das ad-hoc-Netzwerk (31) betrieben wird.

15. Verfahren nach Anspruch 13 oder 14,
**dadurch gekennzeichnet,**
**dass** der Orientierungskanal (32) mit einer niederwertigeren Modulationsart als das ad-hoc-Netzwerk (31) betrieben wird.

16. Verfahren nach einem der Ansprüche 13 bis 15,
**dadurch gekennzeichnet,**
**dass** der Orientierungskanal (32) mit einem verbesserten Fehlerschutz als das ad-hoc-Netzwerk (31) betrieben wird.

17. Verfahren nach einem der Ansprüche 13 bis 16,
**dadurch gekennzeichnet,**
**dass** der Orientierungskanal (32) mit einer niedrigeren Datenrate als das ad-hoc-Netzwerk (31) betrieben wird.

18. Verfahren nach einem der Ansprüche 13 bis 17,
**dadurch gekennzeichnet,**
**dass** der Orientierungskanal (31) mit einer höheren Sendeleistung als das ad-hoc-Netzwerk (32) betrieben wird.

19. Verfahren nach einem der Ansprüche 13 bis 18,
**dadurch gekennzeichnet,**
**dass** ein nicht mit Funkverkehr belegter Kanal des ad-hoc-Netzwerks (31) durch Ermittlung der Größe und/oder Art der Störsignale auf dem Kanal bewertet wird.

20. Verfahren nach einem der Ansprüche 13 bis 19,
**dadurch gekennzeichnet,**
**dass** ein mit Funkverkehr belegter Kanal des ad-hoc-Netzwerks (31) durch eine Analyse der Nachrichtensignale der auf dem Kanal übertragenen Datenpakete bewertet wird.

21. Verfahren nach Anspruch 20,
**gekennzeichnet durch**,
eine Analyse des Konstellationsdiagramms und/oder des Signal-Stör-Abstands und/oder von Fading-Kenngrößen und/oder der Bitfehlerrate.

22. Verfahren nach einem der Ansprüche 13 bis 21,
**dadurch gekennzeichnet,**
**dass** der Orientierungskanal zur Abfrage der Identität eines Netzknotens und zur Abfrage seiner Position verwendet wird.

23. Verfahren nach Anspruch 22,
**dadurch gekennzeichnet,**
**dass** diese Abfrage entweder einmalig, durch den Benutzer initiiert, oder zyklisch, durch den Knoten gesteuert, erfolgt.

## Claims

1. A radio transmission system comprising an ad-hoc network (31) with several nodes (30), across which data packets with a specified waveform are transmitted,
an evaluation device (35) for every node (30), which evaluates the quality of the transmission of the data packets via the ad-hoc network (31), and an orientation channel (32), across which the data packets are transmitted, if the evaluation device (35) has evaluated the quality of the transmission of the data packets across the ad-hoc network (31) as unsatisfactory,
wherein the orientation channel (32) is a channel, which is not part of the ad-hoc network (31),
**characterised in that**
every node (30) of the radio transmission system provides a switchover device (36), which also switches over the reception in a cyclical manner between a frequency of the ad-hoc network (31) and the frequency of the orientation channel (32), if the evaluation device (35) evaluates the transmission via the ad-hoc network (31) as qualitatively adequate.

2. The radio transmission system according to claim 1,
**characterised in that**
the orientation channel (32) has a lower transmission frequency than the ad-hoc network (31).

3. The radio transmission system according to claim 1 or 2,
**characterised in that**
the orientation channel (32) has a more robust modulation type than the ad-hoc network (31).

4. The radio transmission system according to any one of claims 1 to 3,
**characterised in that**
the orientation channel (32) has a lower-value coding than the ad-hoc network (31).

5. The radio transmission system according to any one of claims 1 to 4,
**characterised in that**
the orientation channel (32) has an improved error protection and/or a better coding than the ad-hoc network (31).

6. The radio transmission system according to any one of claims 1 to 5,
**characterised in that**
the orientation channel (32) has a higher transmission power than the ad-hoc network (31).

7. The radio transmission system according to any one of claims 1 to 6,
**characterised in that**
the evaluation device (35) evaluates a channel of the ad-hoc network (31) not occupied with radio traffic by determining the size and/or type of the interference signals on the channel.

8. The radio transmission system according to any one of claims 1 to 7,
**characterised in that**
the evaluation device (35) evaluates a channel of the ad-hoc network (31) occupied with radio traffic by analysing the message signals of the data packets transmitted on the channel.

9. The radio transmission system according to claim 8,
**characterised in that**
the evaluation device (35) implements an analysis of the constellation diagram and/or of the signal-to-noise ratio and/or of fading parameters and/or of the bit-error rate.

10. The radio transmission system according to any one of claims 1 to 9,
**characterised in that**
a network radio device is used for the transmission on the orientation channel and/or for the reception of the orientation channel.

11. The radio transmission system according to any one of claims 1 to 10,
**characterised in that**
every node (30) of the radio transmission system has a separate transmitter-receiver (34) for the reception of the orientation channel (32).

12. The radio transmission system according to any one of claims 1 to 10,
**characterised in that**,
for the reception of the orientation channel (32), every node (30) of the radio transmission system has a hardware or software module, which is integrated within a network radio device associated with the node (30).

13. A method for operating a radio transmission system with an ad-hoc network (31), across which data packets with a specified waveform are transmitted, and with an orientation channel (32),
wherein the quality of the transmission of the data packets across the ad-hoc network (31) is constantly evaluated, and the data packets are transmitted across the orientation channel (32), if the quality of the transmission of the data packets across the ad-hoc network (31) is evaluated as unsatisfactory,
wherein the orientation channel (32) is a channel, which is not part of the ad-hoc network (31),
**characterised in that**,
at every node (30) of the radio transmission system, the reception is also switched over in a cyclical manner between the frequency of the ad-hoc network (31) and the frequency of the orientation channel (32), if the evaluation device (35) evaluates the transmission across the ad-hoc network (31) as qualitatively adequate.

14. The method according to claim 13,
**characterised in that**
the orientation channel (32) is operated with a lower transmission frequency than the ad-hoc network (31).

15. The method according to claim 13 or 14,
**characterised in that**
the orientation channel (32) is operated with a lower value modulation type than the ad-hoc network (31).

16. The method according to any one of claims 13 to 15,
**characterised in that**
the orientation channel (32) is operated with an improved error protection by comparison with the ad-hoc network (31).

17. The method according to any one of claims 13 to 16,
**characterised in that**
the orientation channel (32) is operated with a lower data rate than the ad-hoc network (31).

18. The method according to any one of claims 13 to 17,
**characterised in that**
the orientation channel (31) is operated with a higher transmission power than the ad-hoc network (32).

19. The method according to any one of claims 13 to 18,
**characterised in that**
a channel of the ad-hoc network (31) not occupied with radio traffic is evaluated by determining the size and/or type of the interference signals on the channel.

20. The method according to any one of claims 13 to 19,
**characterised in that**
a channel of the ad-hoc network (31) occupied with radio traffic is evaluated by analysing the message signals of the data packets transmitted on the channel.

21. The method according to claim 20,
**characterised by**
an analysis of the constellation diagram and/or of the signal-to-noise ratio and/or of fading parameters and/or of the bit error rate.

22. The method according to any one of claims 13 to 21,
**characterised in that**
the orientation channel is used to interrogate the identity of a network node and to interrogate its position.

23. The method according to claim 22,
**characterised in that**
this interrogation is implemented either uniquely, initiated by the user, or in a cyclical manner controlled through the node.

## Revendications

1. Système de transmission radio comportant
- un réseau ad hoc (31) avec plusieurs noeuds (30), par lequel des paquets de données sont transmis avec une forme d'onde prédéterminée,
- un dispositif d'évaluation (35) pour chaque noeud (30), qui évalue la qualité de la transmission des paquets de données par le réseau ad hoc (31), et
- un canal d'orientation (32), par lequel les paquets de données sont transmis lorsque le dispositif d'évaluation (35) a évalué la qualité de la transmission des paquets de données par le réseau ad hoc (31) comme étant insuffisante,
- dans lequel le canal d'orientation (32) est un canal qui ne fait pas partie du réseau ad hoc (31),
**caractérisé en ce que** chaque noeud (30) du système de transmission radio présente un dispositif de commutation (36), qui commute aussi cycliquement la réception entre une fréquence du réseau ad hoc (31) et la fréquence du canal d'orientation (32), lorsque le dispositif d'évaluation (35) évalue la transmission par le réseau ad hoc (31) comme qualitativement suffisante.

2. Système de transmission radio selon la revendication 1, **caractérisé en ce que** le canal d'orientation (32) présente une fréquence de transmission plus basse que le réseau ad hoc (31).

3. Système de transmission radio selon la revendication 1 ou 2, **caractérisé en ce que** le canal d'orientation (32) présente un mode de modulation plus robuste que le réseau ad hoc (31).

4. Système de transmission radio selon l'une quelconque des revendications 1 à 3, **caractérisé en ce que** le canal d'orientation (32) présente un codage d'ordre inférieur par rapport au réseau ad hoc (31).

5. Système de transmission radio selon l'une quelconque des revendications 1 à 4, **caractérisé en ce que** le canal d'orientation (32) comporte une protection différentielle améliorée et/ou un meilleur codage que le réseau ad hoc (31).

6. Système de transmission radio selon l'une quelconque des revendications 1 à 5, **caractérisé en ce que** le canal d'orientation (32) présente une puissance d'émission plus élevée que le réseau ad hoc (31).

7. Système de transmission radio selon l'une quelconque des revendications 1 à 6, **caractérisé en ce que** le dispositif d'évaluation (35) évalue un canal du réseau ad hoc (31) non occupé par les radiocommunications par la détermination de la grandeur et/ou de la nature des signaux parasites sur le canal.

8. Système de transmission radio selon l'une quelconque des revendications 1 à 7, **caractérisé en ce que** le dispositif d'évaluation (35) évalue un canal du réseau ad hoc (31) occupé par les radiocommunications par une analyse des signaux de communication des paquets de données transmis sur le canal.

9. Système de transmission radio selon la revendication 8, **caractérisé en ce que** le dispositif d'évaluation (35) effectue une analyse du diagramme de configuration et/ou de l'écart signal-parasite et/ou de paramètres d'évanouissement et/ou du taux d'erreur sur les bits.

10. Système de transmission radio selon l'une quelconque des revendications 1 à 9, **caractérisé en ce que** l'on utilise un appareil radio de réseau pour l'émission sur le canal d'orientation et/ou pour la réception du canal d'orientation.

11. Système de transmission radio selon l'une quelconque des revendications 1 à 10, **caractérisé en ce que** chaque noeud (30) du système de transmission radio comporte un émetteur-récepteur séparé (34) pour la réception du canal d'orientation (32).

12. Système de transmission radio selon l'une quelconque des revendications 1 à 10, **caractérisé en ce que** chaque noeud (30) du système de transmission radio possède, pour la réception du canal d'orientation (32), un module de matériel ou de logiciel qui est intégré dans un appareil radio de réseau appartenant au noeud (30).

13. Procédé de fonctionnement d'un système de transmission radio comportant un réseau ad hoc (31), par lequel des paquets de données sont transmis avec une forme d'onde prédéterminée, et un canal d'orientation (32),
- dans lequel on évalue en permanence la qualité de la transmission des paquets de données par le réseau ad hoc (31) et on transmet les paquets de données par le canal d'orientation (32) lorsque la qualité de la transmission des paquets de données par le réseau ad hoc (31) est évaluée comme étant insuffisante,
- dans lequel le canal d'orientation (32) est un canal qui ne fait pas partie du réseau ad hoc (31),
**caractérisé en ce que** l'on commute cycliquement la réception à chaque noeud (30) du système de transmission radio entre une fréquence du réseau ad hoc (31) et la fréquence du canal d'orientation (32) lorsque le dispositif d'évaluation (35) évalue la transmission par le réseau ad hoc (31) comme qualitativement suffisante.

14. Procédé selon la revendication 13, **caractérisé en ce que** le canal d'orientation (32) fonctionne avec une fréquence de transmission plus basse que le réseau ad hoc (31).

15. Procédé selon la revendication 13 ou 14, **caractérisé en ce que** le canal d'orientation (32) fonctionne avec un mode de modulation d'ordre inférieur par rapport au réseau ad hoc (31).

16. Procédé selon l'une quelconque des revendications 13 à 15, **caractérisé en ce que** le canal d'orientation (32) fonctionne avec une protection différentielle améliorée par rapport au réseau ad hoc (31).

17. Procédé selon l'une quelconque des revendications 13 à 16, **caractérisé en ce que** le canal d'orientation (32) fonctionne avec un débit de données plus faible que le réseau ad hoc (31).

18. Procédé selon l'une quelconque des revendications 13 à 17, **caractérisé en ce que** le canal d'orientation (32) fonctionne avec une puissance d'émission plus élevée que le réseau ad hoc (31).

19. Procédé selon l'une quelconque des revendications 13 à 18, **caractérisé en ce que** l'on évalue un canal du réseau ad hoc (31) non occupé par les radiocommunications en déterminant la grandeur et/ou le type de signaux parasites sur le canal.

20. Procédé selon l'une quelconque des revendications 13 à 19, **caractérisé en ce que** l'on évalue un canal du réseau ad hoc (31) occupé par les radiocommunications en analysant les signaux de communication des paquets de données transmis sur le canal.

21. Procédé selon la revendication 20, **caractérisé par** une analyse du diagramme de configuration et/ou de l'écart signal-parasite et/ou de paramètres d'évanouissement et/ou du taux d'erreur sur les bits.

22. Procédé selon l'une quelconque des revendications 13 à 21, **caractérisé en ce que** l'on utilise le canal d'orientation pour demander l'identité d'un noeud du réseau et pour demander sa position.

23. Procédé selon la revendication 22, **caractérisé en ce que** l'on effectue cette demande soit une fois, à l'initiative de l'utilisateur, soit de façon cyclique, sous la commande du noeud.
